**Europäisches Patentamt**

**European Patent Office**

**Office européen des brevets**

(11) Veröffentlichungsnummer: **0 228 582**
**B1**

# (12) EUROPÄISCHE PATENTSCHRIFT

(45) Veröffentlichungstag der Patentschrift:
**28.11.90**

(51) Int. Cl.⁵: **H04N 5/63**

(21) Anmeldenummer: **86116640.3**

(22) Anmeldetag: **29.11.86**

(54) Schaltungsanordnung zur Erzeugung einer Betriebsspannung und eines Horizontalablenkstromes.

(30) Priorität: **20.12.85 DE 3545287**

(43) Veröffentlichungstag der Anmeldung:
**15.07.87 Patentblatt 87/29**

(45) Bekanntmachung des Hinweises auf die Patenterteilung:
**28.11.90 Patentblatt 90/48**

(84) Benannte Vertragsstaaten:
**AT BE CH DE FR GB IT LI LU NL SE**

(56) Entgegenhaltungen:
**FR-A- 2 411 519**
**US-A- 3 873 846**

(73) Patentinhaber: **Deutsche Thomson-Brandt GmbH,
Hermann-Schwer-Strasse 3 Postfach 1307,
D-7730 Villingen-Schwenningen(DE)**

(72) Erfinder: **Dieterle, Franz, Sommerbergweg 6,
D-7731 Unterkirnach(DE)**
Erfinder: **Hartmann, Uwe, Tallardstrasse 15,
D-7730 Villingen-Schwenningen(DE)**
Erfinder: **Mai, Udo, Mühleschweg 2,
D-7730 VS-Villingen 23(DE)**

**Beschreibung**

Die Erfindung geht aus von einer Schaltungsanordnung zur Erzeugung einer stabilen Betriebsspannung und eines Horizontalablenkstromes sowie weiterer dem Zeilentransformator entnehmbarer Betriebsspannungen in einem Fernsehempfangsgerät, welches auf Netz- oder Batteriebetrieb umschaltbar ist, mit einer im Netzbetrieb als geregeltes Netzteil und Horizontalablenkung arbeitenden Stufe und einer diese Stufe ansteuernden Impulserzeugerstufe, deren Impulse durch eine Regelschaltung in ihrem Tastverhältnis veränderbar sind.

Oftmals ist bei Fernsehgeräten, insbesondere bei tragbaren Fernsehgeräten, die Möglichkeit vorgesehen, sie an unterschiedlichen Spannungsquellen zu betreiben, so daß sie entweder an das Hausnetz oder z.B. an eine Autobatterie anschließbar sind.

Es ist bekannt, hierzu für jede Spannungsquelle je ein Netzteil vorzusehen, auf die der Fernsehempfänger umschaltbar ist. Diese Netzteile sind meistens als Schaltnetzteile ausgebildet, die die Zeilenendstufe versorgen, aus welcher die verschiedenen Betriebsspannungen für die im Fernsehgerät befindlichen zahlreichen Stufen gewonnen werden. Dies bedeutet jedoch einen nicht unerheblichen Schaltungsaufwand, da für die Netzteile und die Zeilenendstufe je ein elektronischer Schalter mit Kühlblech und eine Treiberstufe benötigt werden. Das führt zu hohen Kosten, Verlustleistungen und großem Platzbedarf, was jedoch bei tragbaren Fernsehgeräten nicht erwünscht ist.

Es ist technisch nicht möglich, ein für Netz- und Batteriebetrieb gemeinsames Netzteil aufzubauen, indem dieses einerseits aus der gleichgerichteten Netzwechselspannung und andererseits aus der Batterie gespeist wird, weil die sehr erheblich abweichenden Spannungen aus dem Netz bzw. aus der Batterie einen Regelbereich erfordern, für den es derzeit keine elektronischen Bauteile gibt.

Es ist ein Schaltnetzteil bekannt (US-A 3 873 846), welches aus dem Wechselstromnetz und aus einer Batterie gespeist werden kann. Dieses ist jedoch nicht kombiniert mit einer Horizontalablenkschaltung, wie es in der Schaltungsanordnung, von der die Erfindung ausgeht, der Fall ist. Weiter ist ein gleichspannungsbetriebenes Schaltnetzteil bekannt (FR-A 2 411 519), welches geregelte Betriebsspannungen erzeugt trotz sich verändernder Eingangsspannungen. Eine Kombination eines Betriebs aus dem Wechselstromnetz und aus einer Batterie ist hier nicht vorgesehen.

Der Erfindung liegt die Aufgabe zugrunde, den technischen Aufwand zu verringern und damit den Schaltungsaufbau bei derartigen Empfängern zu vereinfachen. Diese Aufgabe wird durch die im Patentanspruch 1 angegebene Lehre gelöst. Vorteilhafte Ausgestaltungen der Erfindung sind in den Unteransprüchen beschrieben.

Nachstehend wird die Erfindung an einem Ausführungsbeispiel erläutert.

Figur 1 zeigt den prinzipiellen Schaltungsaufbau der Erfindung

Figur 2 zeigt ein Schaltungsbeispiel der Erfindung und

Figur 3 zeigt Spannungsverläufe an den in Figur 1 gekennzeichneten Punkten.

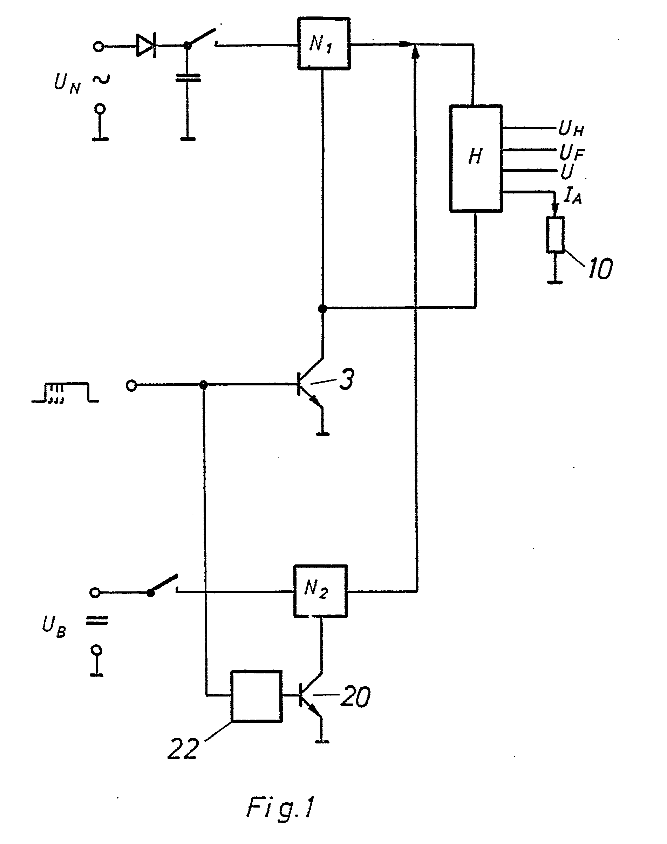

In Figur 1 ist die prinzipielle Wirkungsweise des Schaltungsaufbaus dargestellt. Die kombinierte Netzteil-Horizontalablenkschaltung N1, H eines Fernsehempfängers wird aus der Netzwechselspannung $U_N$ gespeist. Der Schalttransistor 3 wird mit impulsbreiten modulierten zeilenfrequenten Impulsen angesteuert. Die Horizontalablenkschaltung H liefert z.B. Betriebsspannungen U, die Hochspannung $U_H$ und die Fokussierspannung $U_F$ für die Bildröhre und den Ablenkstrom $I_A$ für die Horizontalablenkspule 10. Wird der Fernsehempfänger mit Batteriespannung $U_B$ betrieben und von der Netzspannung $U_N$ getrennt, arbeitet die Kombination N1, H nur noch als Horizontalablenkschaltung zur Erzeugung des Ablenkstroms IA sowie der aus dieser gewonnenen übrigen Spannungen $U_H$, $U_F$, U. Die Netzteilfunktion wird in diesem Fall durch ein weiteres von der Batteriespannung $U_B$ gespeistes Netzteil N2 übernommen, welches mit dem durch zeilenfrequente Impulse gesteuerten Schalttransistor 20 wirksam wird und die Betriebsspannung für die Horizontalablenkstufe H liefert. Die Ansteuerimpulse für den zweiten Schalttransistor 20 müssen um eine halbe Zeilendauer verzögert werden. Dies geschieht mit einer Verzögerungsschaltung 22. Somit können die Impulse für den Schalter 3 mit verwendet werden. Durch die Verzögerung wird der Regelbereich für das zweite Netzteil N2 derart eingeschränkt, daß bei maximaler Batteriespannung $U_B$ die leitende Zeit des Schalters 20 bis nahezu Null gebracht werden kann.

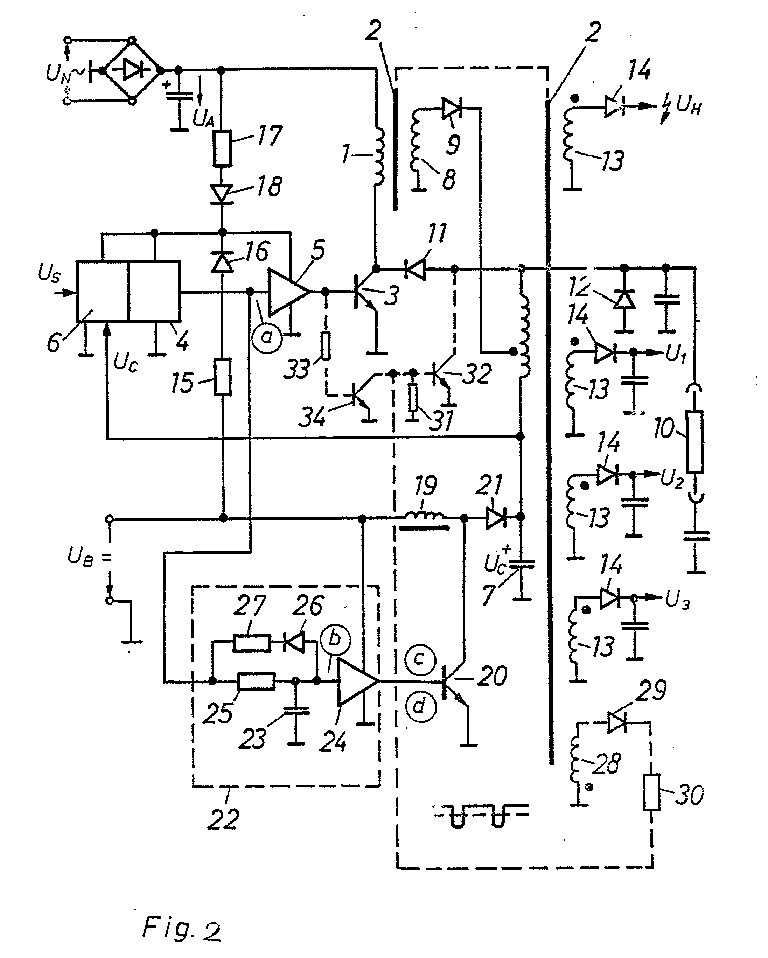

In Figur 2 ist nur der die Erfindung betreffenden Teil eines Fernsehgerätes dargestellt. Es handelt sich dabei um die Schaltungsanordnung zur Erzeugung der Betriebsspannungen sowie des Horizontalablenkstromes, die als Sperrwandlernetzteil in Kombination mit der Horizontalablenkung arbeiten. Die Schaltungsanordnung ist an die Netzspannung UN oder mit Hilfe einer geschalteten Induktivität an die Batteriespannung UB anschließbar. Im Netzbetrieb arbeitet die Schaltung in bekannter Weise, indem die ungeregelte gleichgerichtete Netzspannung UA über die Primärwicklung 1 eines Transformators 2 und einen elektronischen Schalter 3 auf Masse schaltbar ist. Der elektronische Schalter 3 wird durch Steuerimpulse aus einer Impulserzeugerstufe 4 über die Treiberschaltung 5 angesteuert. Das Tastverhältnis dieser Steuerimpulse wird durch eine Regelschaltung 6 verändert, bis die der Regelschaltung zugeführte am Kondensator 7 anliegende Ist-Spannung UC der Soll-Spannung US entspricht. Die geregelte Ist-Spannung Uc entsteht durch Übertragung der in der Primärwicklung 1 gespeicherten magnetischen Energie in die Sekundärwicklung 8. Von der Sekundärwicklung 8 wird diese übertragene magnetische Energie über die Diode 9 als elektrische Energie dem Kondensator 7 zugeführt. Während dieses Vorgangs ist der elektronische Schalter 3 nichtleitend. Die derart erzeugte Betriebsspannung UC versorgt die Horizontalstufe mit der Ablenkwicklung 10 in bekannter Weise, indem während der zweiten Hälfte des Zeilenhinlaufs der Ablenkstrom über die Diode 11 und den elektronischen Schalter 3 fließt und er dagegen während der ersten Hinlaufhälfte über die Diode 12 fließt.

Der Einschaltzeitpunkt für den elektronischen Schalter 3 wird durch die Regelschaltung 6 gesteuert, so daß während der ersten Hälfte des Zeilenhinlaufs bereits Strom durch die Primärwicklung 1 fliessen kann und dementsprechend mehr Energie gespeichert wird. Aus der Horizontalstufe werden die übrigen Betriebsspannungen U aus Sekundärwicklungen 13 über Gleichrichter 14 als stabile Spannungen abgeleitet.

Bei Batteriebetrieb werden die Regelschaltung 6 und die Impulserzeugerschaltung 4 über den Widerstand 15 und über die bei Netzbetrieb gesperrte Diode 16 gespeist. Während des Netzbetriebs erfolgt die Speisung dieser Stufen über den Widerstand 17 und die Diode 18. Bei Batteriebetrieb wird die Spannung UC mit Hilfe einer weiteren Speicherinduktivität 19 erzeugt, die periodisch über den elektronischen Schalter 20 nach Masse schaltbar ist. Die magnetische Energie gelangt während der gesperrten Phase des elektronischen Schalters 20 über die Diode 21 an den Kondensator 7 zwecks Speisung der Ablenkschaltung, deren Netzteilfunktion in diesem Fall außer Betrieb ist. Der elektronische Schalter 20 wird von der ohnehin bei Netzbetrieb vorhandenen gleichen Regel- und Impulserzeugerstufe 6,4 angesteuert. Durch diese Doppelausnutzung ist die Schaltung besonders kostengünstig.

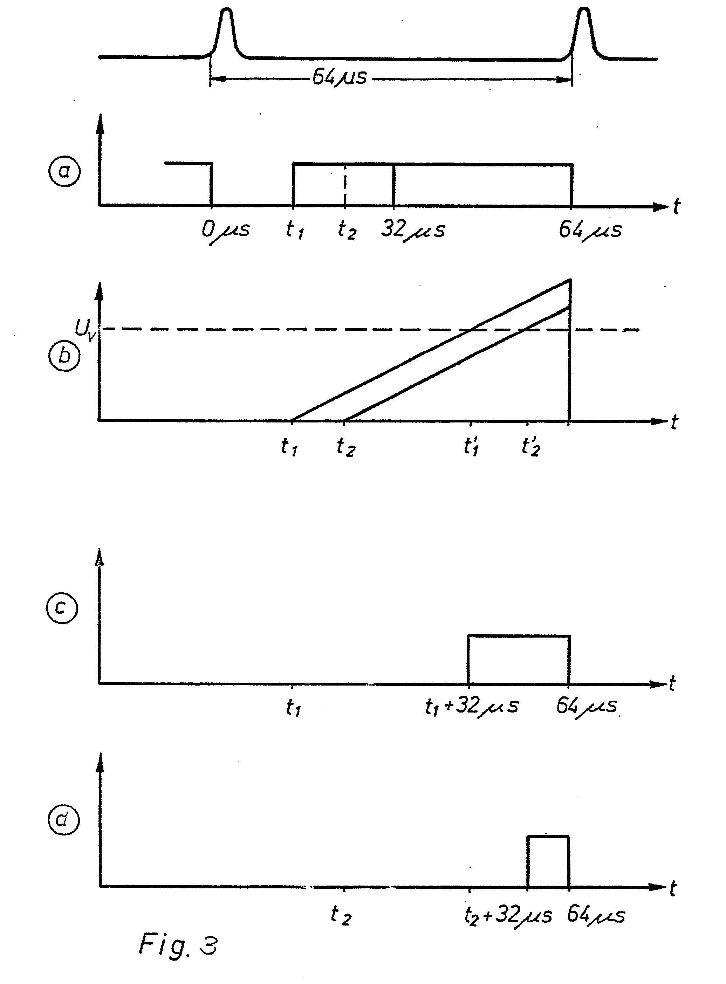

Bei maximaler Last und bei Unterspannung wäre die Zeit, während der der elektronische Schalter 20 geschlossen ist und damit auch die Ladezeit der Speicherinduktivität 19 so lang wie die Zeilenhinlaufzeit. Zum Entladen der Speicherinduktivität 19 stünde lediglich die sehr kurze Zeilenrücklaufzeit zur Verfügung. Um einen vernünftigen Dreiecksbetrieb zu erhalten, d.h. Lade- und Entladezeit sind gleich lang, muß das Ansteuersignal für den elektronischen Schalter 20 in seiner Anstiegsflanke um die Zeit eines halben Zeilenhinlaufs verzögert werden. Die Ausschaltflanken müssen mit dem urprünglichen Ansteuersignal übereinstimmen. Hierzu wird an die Impulserzeugerstufe 4 eine Verzögerungsschaltung 22 angeschaltet, die das Ansteuersignal entsprechend umformt. Die Verzögerungsschaltung 22 kann z.B. folgendermaßen aufgebaut sein. Ein integrierendes RC-Glied, bestehend aus einem Widerstand 25 und einem Kondensator 23, ist an den Eingang eines Treiber-Verstärkers 24 geschaltet, der eine hohe Verstärkung besitzt. Parallel zum Widerstand 25 ist die Reihenschaltung einer Diode 26 mit einem Widerstand 27 angeordnet, wobei die Anode der Diode 26 mit dem Eingang der Treiberstufe 24 und die Kathode der Diode 26 mit dem Widerstand 27 verbunden ist. Zur Erläuterung der Wirkungsweise dient Figur 2. Die Impulse nach Figur 2a, deren ansteigende Flanken zu verschiedenen Zeitpunkten auftreten können, von denen z.B. zwei Zeitpunkte t1 und t2 dargestellt sind, gelangen auf das RC-Netzwerk 25, 23 mit einer so großen Zeitkonstante, daß die Spannung am Kondensator 23 zum Zeitpunkt t1' bzw. t2' einen Schwellwert $U_V$ erreicht, bei welchem die Treiberstufe 24 schaltet (Figur 3b, Figur 3c). Die Zeitkonstante für die negativen Flanken der Impulse nach Figur 3a ist durch die dem Widerstand 25 parallel geschaltete Diode 26 in Serie zu dem niederohmigen Widerstand 27 derart kurz, daß sie im wesentlichen keine Verzögerung erfahren (Figur 3b, Figur 3c, Figur 3d).

Die Verzögerungsschaltung 22 kann entfallen, wenn durch Hinzufügen eines weiteren elektronischen Schalters der Regelbereich der Schaltung erweitert werden kann wie z.B. in der Patentanmeldung DE-A 3 504 485 ausführlich beschrieben und wie dies durch die gestrichelt eingezeichneten Bauteile 28 bis 34 angedeutet ist. In diesem Fall ist dann der Steuereingang des elektronischen Schalters 20 direkt mit dem Ausgang der Impulserzeugerstufe 4 verbunden.

## Patentansprüche

1. Schaltungsanordnung zur Erzeugung einer stabilen Betriebsspannung und eines Horizontalablenkstromes sowie gegebenenfalls weiterer einem Transformator entnehmbarer Betriebsspannungen in einem Fernsehempfangsgerät, welches auf Netz- oder Batteriebetrieb umschaltbar ist, mit einer bei Netzbetrieb als geregeltes Netzteil und als Horizontalablenkstufe arbeitenden Netzteil-Horizontalablenkstufe und einer Netzteil-Horizontalablenkstufe ansteuernden Impulserzeugerstufe, bei der das Tastverhältnis ihrer Impulse durch eine Regelschaltung veränderbar ist, dadurch gekennzeichnet, daß bei Batteriebetrieb die Netzteil-Horizontalablenkstufe (N1, H) den Horizontalablenkstrom ($I_A$) und die dem Transformator (2) entnommenen Spannungen (U) liefert, wobei die Netzteilfunktion (N1) der Netzteil-Horizontalablenkstufe (N1, H) außer Betrieb gesetzt ist und daß bei Batteriebetrieb ein zusätzliches geschaltetes Netzteil (N2; 19, 20, 21) verwendet wird, welches von der Impulserzeugerstufe (4) und Regelschaltung (6) der Netzteil-Horizontalstufe gesteuert wird, wobei die Ansteuerimpulse aus der Impulserzeugerstufe (4) über eine Verzögerungsschaltung (22) an das zusätzliche geschaltete Netzteil gelegt sind, welche die Ansteuerimpulse um eine halbe Zeilendauer verzögert.

2. Schaltungsanordnung nach Anspruch 1, dadurch gekennzeichnet, daß die Netzteilfunktion (N1) der Netzteil-Horizontalablenkstufe (N1, H) automatisch durch Abschalten der Netzwechselspannung ($U_N$) außer Betrieb gesetzt wird.

3. Schaltungsanordnung nach Anspruch 1, dadurch gekennzeichnet, daß bei Batteriebetrieb die Betriebsspannung ($U_C$) von einer Speicherinduktivität (19) erzeugt wird, deren einer Anschluß mit dem einen Pol der Batterie ($U_B$) verbunden ist und deren anderer Anschluß mittels eines steuerbaren Schalters (20), der von der Impulserzeugerstufe (4) angesteuert wird, auf Bezugspotential schaltbar ist, daß die Speicherinduktivität (19) bei geöffnetem steuerbaren Schalter (20) ihre gespeicherte magnetische Energie über die Diode (21) als elektrische Energie an einen Kondensator (7) abgibt und daß die der Impulserzeugerstufe (4) entnommenen Impulse über eine Verzögerungsschaltung (22) an den Steuereingang des steuerbaren Schalters (20) gelegt sind.

4. Schaltungsanordnung nach Anspruch 1, dadurch gekennzeichnet, daß die Verzögerungsschaltung (22) derart aufgebaut ist, daß die ansteigenden Flanken der Impulse um die Hälfte der Zeit eines Zeilenhinlaufs verzögert werden und daß die abfallenden Flanken der Impulse im wesentlichen unbeeinflußt bleiben.

## Claims

1. Circuit layout for generating a stable operating voltage and a horizontal deflecting current as well as, where necessary, further operating voltages derivable from a transformer in a television receiver which can be switched to mains or battery operation, with a power-supply horizontal deflecting stage working in the case of mains operation as a controlled power supply and as a horizontal deflecting stage and a pulse generator stage triggering the power-supply horizontal deflecting stage, in which the mark-to-space ratio of its pulses can be varied by a control circuit, characterised in that with battery operation the power-supply horizontal deflecting stage (N1, H) supplies the horizontal deflection current (I$_A$) and the voltages (U) obtained from the transformer (2), in which the power supply function (N1) of the power-supply horizontal deflecting stage (N1, H) is shut down, and that with battery operation an additional connected power supply (N2; 19, 20, 21) is used which is controlled by the pulse generator stage (4) and control circuit (6) of the power-supply horizontal stage, in which the triggering pulses from the pulse generator stage (4) are applied to the additional connected power supply by means of a delay circuit (22) which delays the triggering pulses by half a line period.

2. Circuit layout according to claim 1, characterised in that the power supply function (N1) of the power-supply horizontal deflecting stage (N1, H) is automatically shut down by switching off of the mains alternating voltage (U$_N$).

3. Circuit layout according to claim 1, characterised in that with battery operation the operating voltage (U$_C$) is generated by a storage inductance (19) one terminal of which is connected to the one pole of the battery (U$_B$) and the other terminal of which can be switched to reference potential by means of a controllable switch (20) which is triggered by the pulse generator stage (4), that the storage inductance (19), when the controllable switch (20) is open, delivers its stored magnetic energy via a diode (21) as electrical energy to a capacitor (7) and that the pulses derived from the pulse generator stage (4) are applied to the control input of the controllable switch (20) by means of a delay circuit (22).

4. Circuit layout according to claim 1, characterised in that the delay circuit (22) is constructed so that the rising edges of the pulses are delayed by half the time of a line sweep and that the falling edges of the pulses remain essentially unaffected.

## Revendications

1. Circuit pour l'élaboration d'une tension de service stable et d'un courant de déviation horizontal ainsi que, le cas échéant, d'autres tensions de service que l'on prélève d'un transformateur, dans un appareil récepteur de télévision commutable en fonctionnement sur secteur ou sur batterie, comprenant un étage bloc d'alimentation-déviateur horizontal, agissant en cas de fonctionnement sur secteur comme bloc d'alimentation régulé et comme étage déviateur horizontal, et un étage générateur d'impulsions, commandant l'étage bloc d'alimentation-déviateur horizontal, dont le rapport cyclique des impulsions peut être varié par un circuit de régulation, caractérisé en ce qu'en cas de fonctionnement sur batterie, l'étage bloc d'alimentation-déviateur horizontal (N1, H) délivre le courant de déviation horizontale (I$_A$) et les tensions (U) prélevées du transformateur (2), la fonction bloc d'alimentation (N1) de l'étage bloc d'alimentation-déviateur horizontal (N1, H) étant mis hors circuit, et que l'on utilise en cas de fonctionnement sur batterie un bloc d'alimentation commutable supplémentaire (N2; 19, 20, 21), commandé par l'étage générateur d'impulsions (4) et le circuit de régulation (6) de l'étage bloc d'alimentation-déviateur horizontal, les impulsions de commande de l'étage générateur d'impulsions (4) étant appliquées au bloc d'alimentation commutable supplémentaire par l'intermédiaire d'un circuit de retard (22), qui retarde les impulsions de commande de la moitié de la durée d'une ligne.

2. Circuit selon la revendication 1, caractérisé en ce que la fonction bloc d'alimentation (N1) de l'étage bloc d'alimentation-déviateur horizontal (N1, H) est automatiquement mis hors circuit par la coupure de la tension alternative du secteur (U$_N$).

3. Circuit selon la revendication 1, caractérisé en ce qu'en cas de fonctionnement sur batterie, la tension de service (U$_C$) est élaborée par une inductance de stockage (19) dont l'une des bornes est reliée à l'un des pôles de la batterie (U$_B$) et dont l'autre borne peut être commutée à un potentiel de référence par un commutateur (20), commandé par l'étage générateur d'impulsions (4), que l'inductance de stockage (19) envoie l'énergie magnétique stockée, sous forme d'énergie électrique, à un condensateur (7) par l'intermédiaire d'une diode (21) lorsque le commutateur commandé (20) est ouvert et que les impulsions prélevées de l'étage générateur d'impulsions (4) sont appliquées à l'entrée de commande du commutateur commandé (20) par l'intermédiaire d'un circuit de retard (22).

4. Circuit selon la revendication 1, caractérisé en ce que le circuit de retart (22) est conçu de façon à ce que les flancs de montée des impulsions soient retardés de la moitié de la durée du balayage aller et que les flancs arrières des impulsions ne soient pour l'essentiel pas influencés.

Fig.1

Fig. 2

Fig. 3